# EUROPEAN PATENT SPECIFICATION

(11) **EP 3 608 138 B1**
(45) Date of publication and mention of the grant of the patent: **16.12.2020**
(21) Application number: 18188150.9
(22) Date of filing: 09.08.2018
(51) Int. Cl.: B60K 7/00, B60K 28/16, F16H 61/456

(54) **HYDRAULIC DRIVE SYSTEM AND VEHICLE COMPRISING THE HYDRAULIC DRIVE SYSTEM**
HYDRAULISCHES ANTRIEBSSYSTEM UND FAHRZEUG MIT DEM HYDRAULISCHEN ANTRIEBSSYSTEM
SYSTÈME D'ENTRAÎNEMENT HYDRAULIQUE ET VÉHICULE COMPRENANT LE SYSTÈME D'ENTRAÎNEMENT HYDRAULIQUE

(43) Date of publication of application: 12.02.2020
(73) Proprietor: Robert Bosch GmbH, 70442 Stuttgart (DE)
(72) Inventor: Edward, Iain, North Queensferry, Fife KYIIIEDC (GB); Hutcheson, John, Dunfermline Fife KY11 3DL (GB)

(56) References cited:
- EP-B1- 2 642 164
- DE-A1-102013 210 413
- DE-B3- 10 255 643
- US-A1- 2016 176 406
- US-B1- 6 408 972

## Description

The present invention relates to a hydraulic drive system and a vehicle comprising the hydraulic drive system.

A hydraulic drive system for a vehicle can comprise a pump configured to supply fluid to motors which are assigned to respective wheels of the vehicle. A hydraulic drive system with a traction control function can improve vehicle handling. Furthermore when the motors are arranged in parallel and a wheel loses traction (slips or starts to slip) fluid flow will be directed away from the other motors and the vehicle can lose all traction.

DE 102 55 643 B3 discloses the features of the preamble of claim 1 and describes a traction control function, wherein four motors driving respective wheels are driven by a common pump in a closed hydraulic circuit. Each wheel has a speed sensor for detecting when a wheel slips, whereupon the flow to the motor is adjustably restricted.

EP 2 642 164 B1 discloses a closed hydraulic circuit comprising a pump and motors. The motors can be simultaneously disengaged from the hydraulic circuit.

Connected is understood to mean fluidly connected, unless stated otherwise.

### Summary of the Invention

It is an object of the invention to provide a hydraulic drive system with a traction control, having increased functionality and a simpler construction. It is a further object to provide a vehicle comprising the hydraulic drive system.

The objects are achieved by the subject-matter of claims 1 and 6. Advantageous further developments are subject-matter of the dependent claims.

A hydraulic drive system comprises: a first hydromachine, at least two second hydromachines, and a valve arrangement for controlling one of the second hydromachines, by means of which valve arrangement: on the one hand said second hydromachine is connectable to and disconnectable from the first hydromachine, and on the other hand the working ports of said second hydromachine are connectable to and disconnectable from each other, wherein the valve arrangement is configured to be actuated on the basis of the rotational speed of at least one second hydromachine.

In other words the second hydromachine can be disconnected from the first hydromachine and the working ports of the second hydromachine can be connected to each other; on the basis of the rotational speed of the second hydromachine. Under said conditions the second hydromachine is connected in a freewheel mode wherein it is not drivable by the first hydromachine and the working ports of said second hydromachine are connected together. For example if a wheel of a vehicle driven by a second hydromachine starts to lose traction, the second hydromachine enters the freewheel mode, so the wheel stops slipping yet is free to turn. There is no need for additional components to manage a pumping flow from the second hydromachine that can occur if some or all traction is regained. Drive can be maintained at the other wheels. Furthermore the hydraulic drive system can be configured to switch between two speeds by setting only some of the second hydromachines to/from freewheel mode.

It may be provided that the hydraulic drive system is a hydraulic drive system with traction control.

It may be provided that said second hydromachine is connectable to and disconnectable from the first hydromachine so that when these two are connected the one can drive the other.

It may be provided that the working ports of said second hydromachine are connectable to and disconnectable from each other so that when said working ports are connected to each other the second hydromachine is connected to a flow path that permits (does not block) a flow from said working ports of the second hydromachine. In other words the flow path serves for balancing or essentially balancing the pressures at said working ports.

The valve arrangement may preferably comprise a proportional valve. So the freewheel mode can be activated by "soft-shifting" which enables a smoother transition between valve actuations.

The hydraulic drive system may preferably be provided as a closed circuit.

One or all hydromachines may be provided as a hydraulic machine, preferably a hydrostatic machine that can perform as a pump and as a motor.

It may be provided that the second hydromachine is a piston machine having pistons that can reciprocate in respective cylinders. Preferably the piston machine may be a radial piston machine. Alternatively or in addition radially arranged pistons in the second hydromachine are pressurizable to bear radially outwards against an inner periphery of a cam ring.

It may be provided that the valve arrangement is configured so that all the working ports of said second hydromachine are connectable to and disconnectable from each other. So in a freewheel mode all the working ports of the second hydromachine are connected together.

It may be provided that the first hydromachine is a variable displacement machine, preferably of swash-plate type.

It may be provided that the valve arrangement is provided for controlling only one of the second hydromachines. So individual traction control for each wheel is provided.

It may be provided that the hydraulic drive system has an electronic control unit (ECU) that can control at least the valve arrangement and/or the first hydromachine.

A respective speed sensor may be provided for determining the rotational speed of each second hydromachine. The speed sensor may communicate with the ECU.

The hydraulic drive system may preferably be provided with a flushing function which can replace fluid in the closed circuit with fluid from a tank.

The hydraulic drive system with a flushing function may comprise a feed pump (having preferably a fixed displacement) and a flushing valve which may be a directional valve, further preferably a 3/3 directional valve. A flushing valve may preferably be provided for each second hydromachine.

It may be provided that the second hydromachines are connected in parallel.

The valve arrangement may be configured to be actuated on the basis of a comparison between the rotational speed of said second hydromachine with the rotational speed of at least one other second hydromachine. So a difference between wheel speeds can indicate wheel slip.

The second hydromachine may be a piston machine having pistons that can reciprocate in respective cylinders; each piston/cylinder pair may be provided with a releasable fixing means to restrict or prevent piston stroke actuation. So under freewheel mode the releasable fixing means restricts or prevents the pistons from contacting or urging against the cam ring. Friction loads are reduced.

It may be provided that the releasable fixing means can prevent piston stroke actuation when the cylinder pressure is below a threshold pressure.

Preferably the releasable fixing means may comprise a magnet or pair of magnets for each piston/cylinder pair.

It may be provided that the valve arrangement is configured so that the working ports of said second hydromachine are connectable to and disconnectable from a pilot line or the tank. So under a freewheel mode the working ports of the second hydromachine can be connected (such as via a common line) to a common pressure source which may be at tank pressure. So fluid pressure is sufficiently low (e.g. tank pressure) so that no urging takes place. Further preferably the releasable fixing means may prevent the pistons from contacting or urging against the cam ring when the working ports of said second hydromachine are connected to the tank.

A respective valve arrangement may be provided to control each second hydromachine. Preferably each valve arrangement may be configured to be actuated on the basis of the rotational speeds of the second hydromachines.

Preferably each valve arrangement may be configured to be actuated on the basis of the rotational speeds of some or all second hydromachines. Alternatively or in addition each valve arrangement may be configured to be actuated on the basis of a difference between the rotational speed of one second hydromachine and the mean rotational speed of two or more second hydromachines. Alternatively or in addition each valve arrangement may be actuatable on the basis of a steering angle.

It may be provided that the first hydromachine is drivably mechanically connectable to a prime mover and has a first working port connected to the second hydromachines via a first main line, and a second working port connected to the second hydromachines via a second main line.

Each second hydromachine may be provided in a motor circuit; for each motor circuit a first branch line may branch off from the first main line and connect to said motor circuit; a second branch line may branch off from the second main line to connect to said motor circuit. A feed pump such as a fixed displacement pump may be drivably mechanically connectable to a prime mover to conduct fluid from a tank. The feed pump may be connected, via a line whose pressure is adjusted by a first pressure-relief valve, to a first and second check valve permitting flow to the first and second main lines respectively. It may be provided that the first hydromachine can adjust its output based on the feeding pressure and/or any signal from an ECU.

It may be provided that each motor circuit comprises a respective second hydromachine whose working ports are connected to the first and second branch lines via at least a valve arrangement. The first and second branch lines may also be connected to respective input ports of a flushing valve that can connect the input port having a lower pressure to an output port by means of a spool urged on each side by respective fluid at each input port. The output port of the flushing valve may lead on the one hand, via an orifice, to a second pressure-relief valve connected to the tank; and on the other hand to a continuously adjustable pressure regulating valve (control valve) which is solenoid-controlled by the ECU and which has a connection to the tank and a connection to the valve arrangement.

Each second hydromachine may be drivingly connectable to a respective wheel.

The valve arrangement may comprise: a housing having first to sixth ports, an outer spool, and an inner spool; forming together a first and second valve. The outer spool may be slidably provided in the housing. The inner spool may be concentrically slidably provided in the outer spool. The first port may be connected to the first branch line; the second port may be connected to one working port of the second hydromachine; the third port may be connected to another working port of the second hydromachine; the fourth port may be connected to the second branch line; the fifth port may be connected to the control valve; the sixth port may be connected to the tank.

It may be provided that the valve arrangement comprises a first valve as a directional valve having first positions and second positions; and is urged toward its first positions by an urging means (e.g. spring); in the first positions the first and second ports are connected together, and the third and fourth ports are connected together.

It may be provided that the first valve is urgeable by a fluid at the fifth port toward its second positions. It may be provided that in the second positions the second and third ports are connected together.

It may be provided that the second valve is a discretely switchable directional valve having at least a first and a second position; and is urged toward its first position by an urging means (e.g. spring).

It may be provided that the second valve is urgeable by a fluid at the fifth port toward its second position; and in the second position the fifth port, or alternatively a seventh port connected (directly) to the flushing valve output port, is connected to the second and third ports. It may be provided that the second valve can reach its second position only when the first valve is not in any of its first positions.

It may be provided that the second valve can reach an intermediate position between the first and second positions, In the intermediate position the sixth port is connected to the second and third ports. It may be provided that the second valve can reach its intermediate position only when the first valve is not in any of its first positions.

It may be provided that each second hydromachine is drivingly connected to a respective wheel, and each valve arrangement is configured to be actuated on the basis of a detected amount of slip at a wheel (preferably the respective wheel). As well as traction control, the hydraulic drive system can provide a multi-speed operation. In other words the freewheel mode allows the hydraulic drive system to stepwisingly switch to a higher vehicle speed with the same output from the first hydromachine.

It may be provided that each valve arrangement is configured to be actuated on the basis of a detected amount of slip at the wheel drivable by the second hydromachine controlled by said valve arrangement.

It may be provided that the valve arrangements are configured to actuate (preferably to bring about a change, such as a step-change, in vehicle speed) even when no slip at a wheel is detected. So the hydraulic drive system provides a multi-speed function in addition to traction control.

It may be provided that the hydraulic drive system is configured to drive the/each at least one second hydromachine both before and after the speed change, which can be a step-change. So the speed change is not achieved merely by completely disengaging the hydraulic drive system and driving the vehicle by means other than the hydraulic drive system, for example.

It may be provided that the hydraulic drive system is configured to change between a four-wheel hydraulic drive and a two-wheel hydraulic drive, preferably by actuating the valve arrangements.

### Description of Figures

Fig. 1 is a schematic of a hydraulic drive system of a first embodiment,
Fig. 2 is a schematic of a motor circuit of the hydraulic drive system,
Fig. 3 is a view of a valve arrangement of the motor circuit in a position for driving the motor,
Fig. 4 is a view of the valve arrangement in an intermediate position, and
Fig. 5 is a of the valve arrangement in a freewheel position.

### Detailed Description of Embodiments

In the following, embodiments of the present invention are described on the basis of the accompanying figures.

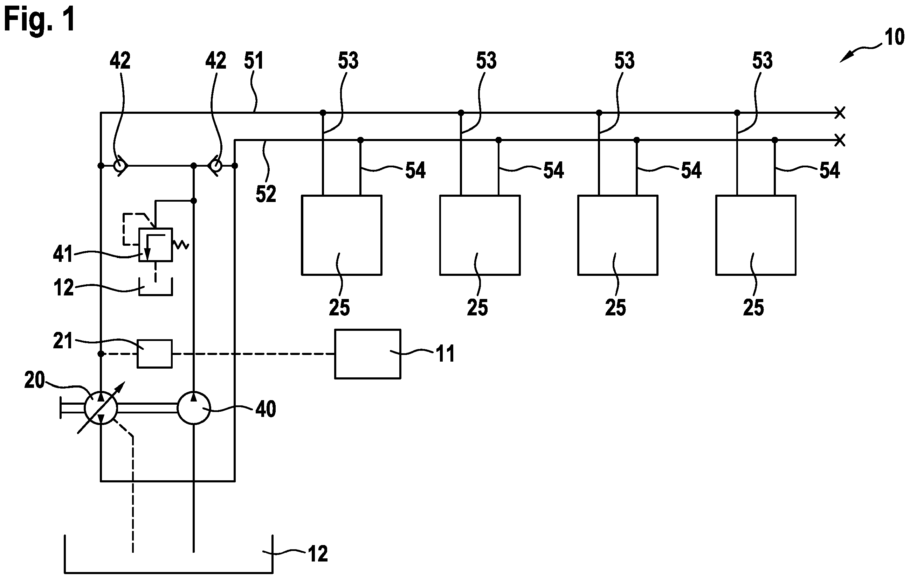

A hydraulic drive system ("system") according to a first embodiment is shown in Fig.1. The system 10 has a closed circuit configured for driving a vehicle and comprises a first hydromachine, especially in the form of a main pump 20 for supplying hydraulic fluid ("fluid") and four essentially identical motor circuits 25 connected in parallel The operations of the system 10 are controllable by an ECU (electronic control unit) 11.

The main pump 20 is a variable displacement pump, further preferably an axial piston machine such as a swash-plate type, and is drivably mechanically connectable to a prime mover (not shown) such as a diesel engine. The main pump 20 is controlled by a pump controller 21 which communicates with the ECU 11, and has a first working port connected to the motor circuits 25 via a first main line 51, and a second working port connected to the motor circuits 25 via a second main line 52. For each motor circuit 25 a first branch line 53 branches off from the first main line 51 to connect to said motor circuit 25; and a second branch line 54 branches off from the second main line 52 to connect to said motor circuit 25.

The system 10 has a flushing function wherein hotter fluid is extracted from the system by several flushing valves 60 and a common feed pump 40 replaces it with cooler fluid from a tank 12. The components that serve the replacing are described as follows. The feed pump 40 is drivably mechanically connectable to the prime mover so that it can conduct fluid from the tank 12. The feed pump 40 is connected, via a line whose pressure is adjusted by a first pressure-relief valve 41, to a first and second check valve 42 leading to the first 51 and second 52 main lines respectively so that fluid is not suppliable from the first 51 and second 52 main lines directly into the feed pump 40. The tank 12 serves toward the flushing function and also as a sump for any fluid leaking from the system 10. The main pump 20 can adjust its displacement based on the feeding pressure and/or any signal from the ECU 11.

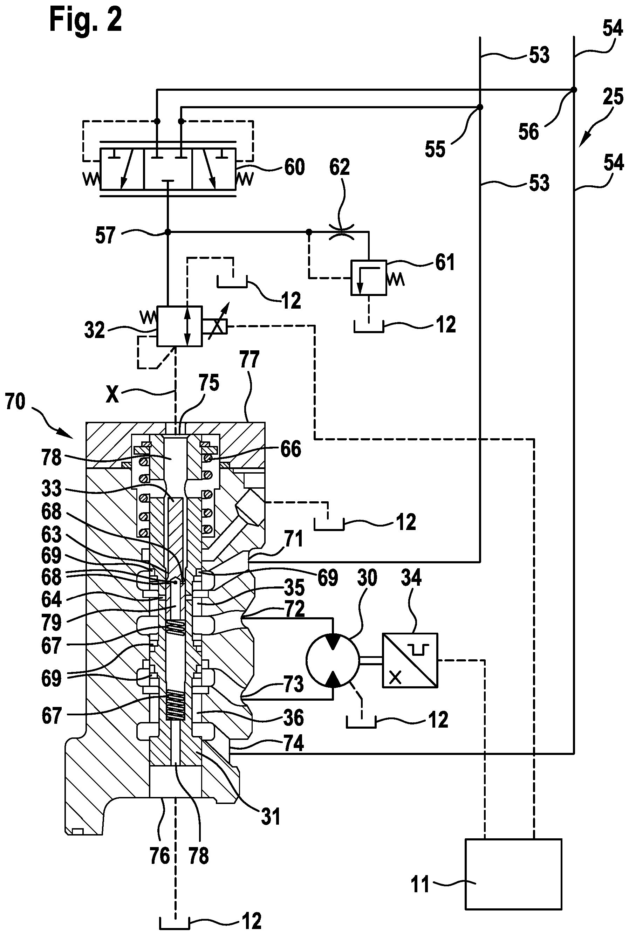

An exemplary motor circuit 25 is shown schematically in Fig. 2 and comprises a second hydromachine, especially in the form of a motor 30 connected to the first 53 and second 54 branch lines via a valve arrangement 70. The first 53 and second 54 branch lines are also connected to a flushing valve 60 which is a 3/3 directional and continuously variable valve having two input ports and one output port. In other words a respective junction 55, 56 on each branch line connects said branch line to a respective input port of the flushing valve 60. The flushing valve 60 connects the input port having a lower pressure to its output port by means of a spool being urged on each side by respective pressures from fluid at each input port. When the pressures are balanced, the spool of the flushing valve 60 adopts a spring-centred position disconnecting all flushing valve ports. The output port of the flushing valve 60 leads to another junction 57, one branch of which leads to a second pressure-relief valve 61 via an orifice 62. The fluid at the orifice inlet acts on the second pressure-relief valve 61 to counter the force of a spring that urges said valve into a blocked state. When the pressure of fluid upstream of the orifice 62 reaches a threshold, the second pressure-relief valve 61 opens a fluid path to the tank 12. In this way fluid is extracted, as part of the flushing function, from the closed circuit.

The other branch of the junction 57 leads to a pressure regulating valve (control valve 32) which is solenoid-controlled by the ECU 11 and has a connection to the tank 12. The pressure regulating valve can regulate a fluid pressure to form a control pressure X. The control valve 32 is connected via a line to the valve arrangement 70.

The motor 30 is a hydrostatic machine with a rotary group comprising pistons pushing radially outwardly against a cam ring, further preferably drivable in either rotational sense. The motor 30 is drivingly mechanically connectable to a wheel of a vehicle, such as via a driveshaft and/or a transmission. The rotational speed of the motor 30 is detectable by a speed sensor 34 which can communicate with the ECU 11.

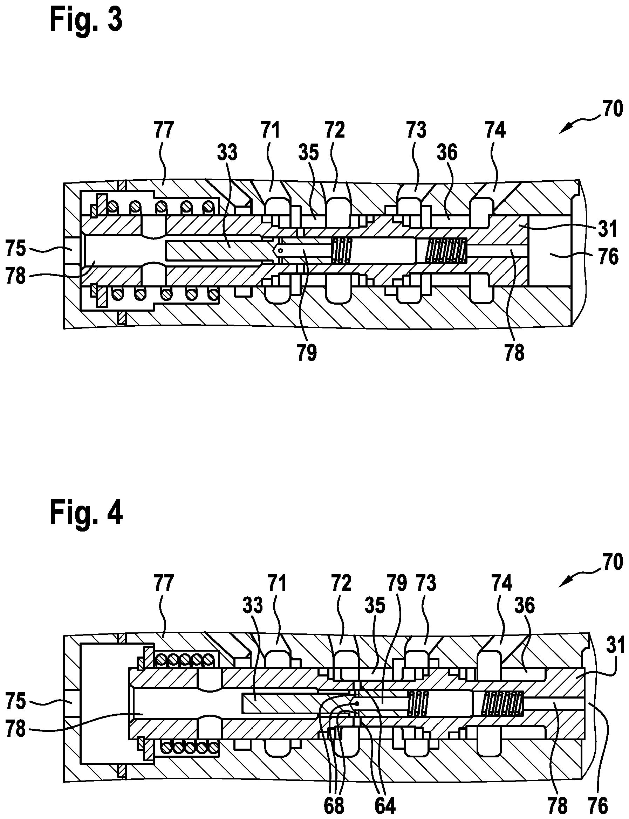

The valve arrangement 70 is shown in Figs. 2 to 5 in sectional view and comprises a housing 77 having first to sixth ports 71-76, an outer spool 31, and an inner spool 33. Together these form a first and second valve. The outer spool 31 is slidably provided in the housing 77. The inner spool 33 is slidably provided in the outer spool 31. Figs. 3 to 5 show the valve arrangement in various positions described further below.

The first port 71 is connected to the first branch line 53; the second port 72 is connected via a line to the one motor port; the third port 73 is connected via a line to the other motor port; the fourth port 74 is connected to the second branch line 54; the fifth port 75 is connected via a line to the control valve 32; the sixth port 76, which is at an axially opposite end from the fifth port 75, is connected via a line to the tank 12.

The outer spool 31 is an essentially cylindrical member having: cavities on its outer periphery serving as first 35 and second 36 galleries, a through hole 78, and radial bores 64. The outer spool 31 has first positions and second positions. A first spring 66 urges the outer spool 31 toward the first positions. In the first positions the first 71 and second 72 ports are connected together via the first gallery 35 and the third 73 and fourth 74 ports are connected together via the second gallery 36. Axial end portions of each gallery are provided with metering notches 69. Figs. 2 and 3 show the outer spool 31 in a first position.

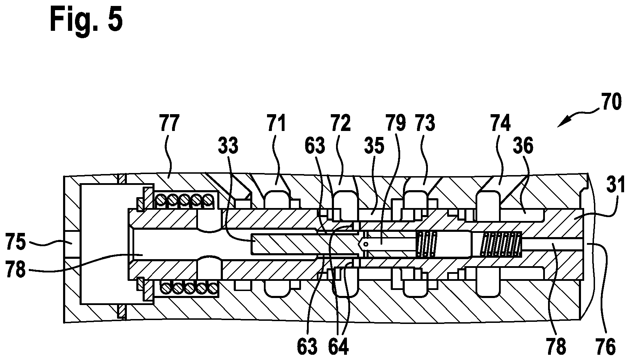

The outer spool 31 can be urged by fluid at the fifth port 75 toward its second positions. In the second positions the second 72 and third 73 ports are connected together via the first gallery 35. The end of the outer spool 31 near the fifth port 75 is connected to the fifth port 75 in all outer spool positions. The end of the outer spool 31 nearer the sixth port 76 is connected to the sixth port 76 in all outer spool positions. Figs. 4 and 5 show the outer spool 31 in a second position.

Thus a first valve as a continuously adjustable directional valve is provided whose ports are the first 71 to fifth 75 ports, and which has first positions and second positions corresponding to the first and second positions of the outer spool 31. Continuously variable and proportional adjustment to and from the first positions and the second positions is possible by adjusting the control pressure X at the fifth port 75.

The inner spool 33 is an essentially cylindrical member having a recess 63 provided on the inner spool's outer surface, extending from an axial end of the inner spool 33 over a part of its axial length. The inner spool 33 is slidably received by a through-hole in the centre of the outer spool 31. The recess 63 is configured to be connected to the fifth port 75 in all positions of the inner spool 33 and outer spool 31. The inner spool 33 has a centre hole 79 extending from its axial end nearer the sixth port 76 and up to a region part way along the axial length of the inner spool 33. At said region one or more radial holes 68 lead from the centre hole 79 to the outer surface of the inner spool 33, preferably opening into a gallery (not shown) on the outer surface of the inner spool 33. Radial bores 64 are provided in the outer spool 31 connecting the through hole 78 to the first gallery 35, of the outer spool 31. The radial bores 64 can align with the radial holes 68. The axial end of the inner spool 33 nearer the sixth port 76 can contact the fluid at the sixth port 76 by virtue of the through hole 78. The inner spool 33 serves to block the through hole 78 from connecting the fifth port 75 with the sixth port 76.

The inner spool 33 has a first and a second position. A second spring 67 urges the inner spool 33 toward its first position wherein the fifth port 75 is not connected to any other ports of the valve arrangement 70. The inner spool 33 can be urged by fluid at the fifth port 75 toward its second position against the urging of the second spring 67. In the second position the recess 63 is aligned with the bores 64 so that the fifth port 75 is connected to the first gallery 35. The inner spool 33 has an intermediate position between the first and second position wherein the radial holes 68 are aligned with the bores 64. In the intermediate position the first gallery 35 is connected to the sixth port 76 and disconnected from the fifth port 75. The end of the inner spool 33 nearer the sixth port 76 is connected to the sixth port 76 in all positions. Figs. 2 and 3 show the inner spool 33 in the first position.

The spring stiffnesses are preferably selected so that the force for moving the outer spool 31 out of its first positions is less than that for moving the inner spool 33 to its second position. With increasing control pressure X (at the fifth port 75) the outer spool 31 moves out of its first positions, i.e. along its full stroke. As the control pressure X increases further the inner spool 33 moves from its first position to its second position via its intermediate position. In the following when it is described that the inner spool 33 is in its second position, it is implicit that the outer spool 31 is not in any first position. Fig. 4 shows the inner spool 33 in the intermediate position; Fig. 5 shows the inner spool 33 in the second position.

Thus a second valve as a 3/3 discretely switchable directional valve is provided whose ports are the fifth 75 and sixth ports 76, and the first gallery 35 of the outer spool 31. The second valve has a first, second, and intermediate positions, corresponding to the first, second, and intermediate positions of the inner spool 33 respectively.

The function of the system 10 of the first embodiment is now described, wherein said system 10 is used to drive a four-wheel vehicle. The vehicle is travelling at first in one direction in four-wheel hydraulic-drive and with no wheel slip, each motor 30 driving a wheel. Fluid flows from the running main pump 20 through the first main line 51 and is then distributed to the four first branch lines 53 to flow into each motor circuit 25. The function of one motor circuit 25 is now described exemplarily. Referring to Fig. 2, the flow branches from the first branch line 53 at the junction 55, toward the flushing valve 60, and also continues along the first branch line 53 to the first port 71. The second branch line 54 is unblocked and the first branch line 53 is blocked, at the flushing valve 60.

When no slip at the wheel is detected the first valve is preferably not in any of its second positions. The fluid entering the valve arrangement 70 at the first port 71 exits from the second port 72 after passing through the first gallery 35 and then flows through the motor 30 which rotates and drives its wheel. The fluid then exits the motor 30 and returns to the valve arrangement 70 though the third port 73 whereupon it passes through the second gallery 36 and exits from the fourth port 74. The fluid then flows through the second branch line 54 where it is divided at the junction 56 into a flow to the second main line 52 and a flow to the flushing valve 60. The flushing valve 60 directs flow from the lower-pressure second branch line 54 to its outlet port. The line from the flushing valve 60 to the control valve 32 is pressure-relieved by the orifice 62 and the second pressure-relief valve 61. The control valve 32 further regulates the fluid to apply a control pressure X to the fifth port 75.

When the wheel starts to slip its speed sensor 34 detects a speed change. The ECU 11 controls the solenoid of the control valve 32 to increase the control pressure X. As a result the outer spool 31 starts to move toward its second positions. The motor ports are brought further into direct connection with each other and simultaneously further out of connection with the pump flow. As the control pressure X increases further the first valve is no longer in one of its first positions; the inner spool 33 moves from its first position to its second position via the intermediate position. In the intermediate position the motor ports are connected to the tank 12 so that for a predetermined period the pressures in the motor cylinders are released before the second valve reaches the second position. This reduces undesirable residual pressures in the freewheeling motor circuit 25. With the second valve in the second position the motor ports are disconnected from the pump and connected to the fifth port 75 via the recess 63 and bores 64 so that fluid at control pressure X can circulate through the motor 30. The control pressure X is sufficient to pressurize said cylinders so that the pistons push against the cam ring at all times, in preparation for a recovery of wheel traction. The motor 30 no longer receives driving fluid from the main pump 20; wheel spin is reduced.

If the traction at said undriven wheel recovers, it is possible that the wheel will start to be driven by friction with the ground as the remaining wheels of the vehicle continue to drive without slipping. In this case the motor 30 will start to act as a pump which could create a pressure rise counter to the pump pressure. But since the fluid in the motor 30 is instead permitted to recirculate though: the motor ports; the second port 72; the first gallery 35; and the third port 73, a freewheel of the motor 30 is permitted. So undesired further wheel slip or skid is avoided. The ECU 11 then detects the reduction in wheel slip and reduces the control pressure X so that the first valve and the second valve return to first positions; the pump again drives the motor 30. A freewheel mode of a motor is understood to be a recirculation condition in which the first valve is not in any of its first positions; the second valve may be in any position. In other words in the freewheel mode the pump is disconnected from the motor 30 which is permitted to rotate. Since the first valve is proportional, mid-way states can be achieved wherein the pump is connected to the motor 30 and at the same time some freewheeling of the motor 30 is possible. Said states can be used to achieve a soft-shifting and/or to meter the traction control.

With reverse travel the direction of the main pump 20 is reversed. The second main and branch lines 52, 54 are now high pressure lines, and the first main and branch lines 51, 53 are now low pressure lines. The system 10 when driving in the other direction has a corresponding function to that when driving in the one direction.

The ECU 11 performs the traction control by controlling the first and second valves in each motor circuit 25 based on the signal of the respective speed sensor 34 such that the amount of slip at each wheel does not exceed a predetermined value. The amount of slip may be calculated based on the measured speeds and expected speeds at the wheels. For example at straight travel an expected speed may be based on the mean value of all measured speeds. Under curved travel a correction may be made based on a degree of steering, such as the steering angle of the vehicle's steering mechanism. In this way the degree of slip at each wheel may be based on not only the speed of said wheel, but also on the speeds of the other wheels.

A freewheeling motor 30 can be turned by ground friction without being restricted by a restrictor provided in series. In other words the motor is put into a freewheel condition rather than being blocked when slip is detected.; an additional circuit for overriding any restrictor is not required. Also it is not necessary to provide a variable displacement main pump for each motor 30, nor variable displacement motors. The flow to each motor 30 can be adjusted even when only one main pump is provided.

The system 10 is can set predetermined motor circuits 25 in respective freewheel modes even when no wheel slip at any driving wheel is detected, without additional components. Thus a freewheel mode is selected for some wheels to achieve various vehicle speeds with the same pump output. For example a four-wheel hydraulic-drive can be switched to a two-wheel hydraulic-drive for higher speed operation, optionally on command from the human operator. In this way a traction control and dual variable ratio hydrostatic transmission system using motors with freewheel modes is achieved.

A second embodiment is now described with differences from the first embodiment identified in the following. In summary the intermediate position is omitted. The inner spool 33 has no centre hole 79 nor radial holes 68. Therefore the sixth port 76 is not connected to the first gallery 35 in any position; the inner spool 33 does not have an intermediate position. The fifth port 75 is still used, as in the first embodiment, for controlling the positions of the inner 33 and outer 31 spools by means of control pressure X. The present embodiment has a simplified structure compared to the first embodiment and can be used in cases where the residual pressures within the motor 30 are not excessive.

A third embodiment is now described with differences from the first embodiment identified in the following. In summary when the inner spool 33 is in its second position the motor ports are not connected to the fifth port 75 but are instead connected to a seventh port (not shown) provided in the housing 77.

The recess 63 is isolated from the fifth port 75 in all positions. The seventh port connects with the recess when the inner spool is in its second position, and is connected via a line to a pressure source other than the regulated outlet the control valve 32, such as to the junction 57. The axial end faces of the inner and outer 31 spools are nonetheless connected to the fifth port 75 at one end, so fluid at the fifth port 75, which can now be considered a purely pilot port, can urge the spools as in the previous embodiments.

In this way when the motor circuit 25 is in freewheel mode the motor cylinders are pressurized to a pressure which can differ from the control pressure X. The present embodiment has advantages over the embodiments described above with regard to the force of the free-wheeling pistons against the cam ring. For example the pressure of the fluid pushing the pistons against the cam ring does not vary with adjustments in the control pressure X; the design of the system 10 is less restricted.

A fourth embodiment is now described, with differences from the first embodiment identified in the following. In summary, instead of the second inner spool position connecting the motor ports to the control pressure X, said position connects the motor ports to the tank 12.

The recess 63 is omitted. The axial extent of the centre hole 79 and axial position of the radial holes 68 are adapted to connect to the bores 64 when the inner spool is in the second position. So the second position connects the sixth port 76 to the second 72 and third 73 ports via the first gallery 35, the intermediate position is omitted. So the freewheeling mode differs from that of the first embodiment in that the motor cylinders are now at tank pressure. Therefore essentially no hydraulic forces push the pistons against the cam ring. Frictional loads are reduced.

In a modification of any of the above embodiments each piston and its corresponding cylinder are assigned a magnet or magnets. For example a (permanent) magnet may be positioned on the piston to be attracted to the cylinder. The cylinder may comprise a ferromagnetic material. Thus magnetic forces can urge the pistons toward the pistons' end strokes so that the pistons or any roller provided thereon do not bear on the cam ring. The magnetic force may be selected to overcome any urging force due to the fluid pressure acting on the pistons and/or any inertia force due to rotation. In other words the magnets can retain the pistons in a zero displacement mode, which is a freewheel mode with zero motor displacement. Frictional loads are reduced.

Advantages are achieved when the present modification is applied to the fourth embodiment, wherein the cylinder pressures can be set to tank pressure in the freewheel mode, and so the required magnetic force can be minimized. When the control pressure X is subsequently increased to return the outer spool 31 into its first positions the force from the fluid in the cylinders can overcome the magnetic force. By providing magnets, which each may form a mechanical and releasable fixing means, frictional loads in the freewheel mode are further reduced and undesired behaviour arising from freely actuating pistons is reduced. Furthermore the fluid pressures inside and outside of the cylinders need not be set to create a pressure difference sufficient keep the pistons in the retracted states.

Various further and combinable modifications to the embodiments are shown in the following examples.

The vehicle need not be of four-wheel hydraulic-drive type. For example traction can be controlled when occurrence of wheel slip is determined at at least one wheel and no wheel slip is determined at at least one other wheel.

Further wheels on the vehicle may be drivable by mechanical means such as a mechanical transmission to a diesel engine.

The components of each motor circuit 25, such as at least the valve arrangement 70, may be integrated into the case of its respective motor 30.

The speed sensors 34 need not be provided on the motor 30. The speed sensors may assignable to a rotating part of any of: the motor, any transmission, and the wheel; or on a rotating part connecting these.

The intermediate position of the inner spool 33 need not be provided as a transitory position but may be provided as a third position corresponding to a predetermined control pressure X. In this way two freewheel modes are achieved which differ by the corresponding motor cylinder pressures.

The first and second valves may be provided in respective housings.

A hydraulic circuit for driving wheels of a vehicle has a traction control function wherein valves allow a motor to adopt a freewheel or zero-displacement mode. A pump drives more than one motor. Motors are fitted with speed sensors which give a signal/signals to a control unit which can identify when a wheel is slipping. The controller can then shift valves to give said freewheel or zero-displacement mode. The one or more valves connect input and output ports of the motor together and optionally to a pilot supply while disconnecting from the pump supply and return lines. A solenoid valve (control valve) is used to supply the pilot pressure to a main valve. The main valve can connect input and output ports of the motor together. The main valve may have a lower spring setting than a second valve which shifts with a higher pressure than the main valve so that once the motor is recirculating (freewheel) there is a connection (from the motor) to the pilot supply. A flushing spool may be provided which selects the lower of the two pressure lines from the pump and connects to a relief valve and orifice. The pilot supply may be provided by tapping off before the relief valve and orifice.

### Reference Signs

- X: control pressure
- 10: hydraulic drive system
- 11: electronic control unit
- 12: tank
- 20: main pump (first hydromachine)
- 21: pump controller
- 25: motor circuit
- 30: motor (second hydromachine)
- 31: outer spool
- 32: control valve
- 33: inner spool
- 34: speed sensor
- 35: first gallery
- 36: second gallery
- 40: feed pump
- 41: first pressure-relief valve
- 42: check valve
- 51: first main line
- 52: second main line
- 53: first branch line
- 54: second branch line
- 55: junction on first branch line
- 56: junction on second branch line
- 57: junction at flushing valve outlet
- 60: flushing valve
- 61: second pressure-relief valve
- 62: orifice
- 63: recess
- 64: bores
- 66: first spring
- 67: second spring
- 68: radial holes
- 69: metering notches
- 70: valve arrangement
- 71: first port
- 72: second port
- 73: third port
- 74: fourth port
- 75: fifth port
- 76: sixth port
- 77: housing
- 78: through hole (in outer spool)
- 79: centre hole (in inner spool)

## Claims

1. Hydraulic drive system comprising:
a first hydromachine (20),
at least two second hydromachines (30), and
a valve arrangement (70) for controlling one of the second hydromachines (30), **characterized in that** the valve arrangement (70) is configured so that:
on the one hand said second hydromachine (30) is connectable to and disconnectable from the first hydromachine (20), and
on the other hand the working ports of said second hydromachine (30) are connectable to and disconnectable from each other, wherein
the valve arrangement (70) is configured to be actuated on the basis of the rotational speed of at least one second hydromachine (30).

2. Hydraulic drive system according to claim 1, wherein
the valve arrangement (70) is configured to be actuated on the basis of a comparison of the rotational speed of said second hydromachine (30) with the rotational speed of at least one other second hydromachine (30).

3. Hydraulic drive system according to claim 1 or 2, wherein
the second hydromachine (30) has pistons that can reciprocate in respective cylinders, and each piston/cylinder pair is provided with a releasable fixing means to restrict or prevent piston stroke actuation.

4. Hydraulic drive system according to one of the previous claims, wherein the valve arrangement (70) is configured so that the working ports of said second hydromachine (30) are connectable to and disconnectable from a tank (12).

5. Hydraulic drive system according to one of the previous claims, wherein
a respective valve arrangement (70) is provided to control each second hydromachine (30).

6. Vehicle comprising the hydraulic drive system (10) according to claim 5, wherein
each second hydromachine (30) is drivingly connected to a respective wheel, and
each valve arrangement (70) is configured to be actuated on the basis of a detected amount of slip at the respective wheel.

7. Vehicle according to claim 6, wherein
the valve arrangements (70) are configured to bring about a change in vehicle speed even when no slip at a wheel is detected.

## Patentansprüche

1. Hydraulisches Antriebssystem, Folgendes umfassend:
eine erste Hydromaschine (20),
mindestens zwei zweite Hydromaschinen (30) und
eine Ventilanordnung (70) zum Steuern einer der zweiten Hydromaschinen (30),
**dadurch gekennzeichnet, dass** die Ventilanordnung (70) zu Folgendem ausgelegt ist:
einerseits, dass die zweite Hydromaschine (30) mit der ersten Hydromaschine (20) verbindbar und davon trennbar ist, und
andererseits, dass die Wirkanschlüsse der zweiten Hydromaschine (30) miteinander verbindbar und voneinander trennbar sind, wobei
die Ventilanordnung (70) dazu ausgelegt ist, auf Grundlage der Drehgeschwindigkeit mindestens einer zweiten Hydromaschine (30) betätigt zu werden.

2. Hydraulisches Antriebssystem nach Anspruch 1, wobei die Ventilanordnung (70) dazu ausgelegt ist, auf Grundlage des Vergleichs der Drehgeschwindigkeit der zweiten Hydromaschine (30) mit der Drehgeschwindigkeit mindestens einer anderen zweiten Hydromaschine (30) betätigt zu werden.

3. Hydraulisches Antriebssystem nach Anspruch 1 oder 2, wobei
die zweite Hydromaschine (30) Kolben aufweist, die sich in entsprechenden Zylindern auf und ab bewegen, wobei jedes Kolben/Zylinder-Paar mit einer lösbaren Fixierungseinrichtung versehen ist, um die Betätigung des Kolbenhubs einzuschränken oder zu verhindern.

4. Hydraulisches Antriebssystem nach einem der vorstehenden Ansprüche, wobei die Ventilanordnung (70) derart ausgelegt ist, dass die Wirkanschlüsse der zweiten Hydromaschine (30) mit einem Tank (12) verbindbar und davon trennbar sind.

5. Hydraulisches Antriebssystem nach einem der vorstehenden Ansprüche, wobei
eine entsprechende Ventilanordnung (70) vorgesehen ist, um jede zweite Hydromaschine (30) zu steuern.

6. Fahrzeug, das hydraulische Antriebssystem (10) nach Anspruch 5 umfassend, wobei
jede zweite Hydromaschine (30) antreibend mit einem entsprechenden Rad verbunden ist und jede Ventilanordnung (70) dazu ausgelegt ist, auf Grundlage des erfassten Schlupfs am entsprechenden Rad betätigt zu werden.

7. Fahrzeug nach Anspruch 6, wobei
die Ventilanordnungen (70) dazu ausgelegt sind, die Fahrzeuggeschwindigkeit zu verändern, selbst wenn am Rad kein Schlupf erfasst wird.

## Revendications

1. Système d'entraînement hydraulique comprenant :
une première hydromachine (20),
au moins deux secondes hydromachines (30), et
un agencement de vanne (70) pour commander une des secondes hydromachines (30), **caractérisé en ce que** l'agencement de vanne (70) est conçu de sorte que :
d'une part, ladite seconde hydromachine (30) puisse être connectée à la première hydromachine (20) et déconnectée de celle-ci, et
d'autre part, les orifices de travail de ladite seconde hydromachine (30) puissent être connectés les uns aux autres et déconnectés les uns des autres,
l'agencement de vanne (70) étant conçu pour être actionné sur la base de la vitesse de rotation d'au moins une seconde hydromachine (30).

2. Système d'entraînement hydraulique selon la revendication 1,
l'agencement de vanne (70) étant conçu pour être actionné sur la base d'une comparaison de la vitesse de rotation de ladite seconde hydromachine (30) avec la vitesse de rotation d'au moins une autre seconde hydromachine (30).

3. Système d'entraînement hydraulique selon la revendication 1 ou 2,
la seconde hydromachine (30) ayant des pistons qui peuvent effectuer un mouvement alternatif dans des cylindres respectifs, et chaque paire de piston/cylindre étant munie d'un moyen de fixation amovible pour limiter ou empêcher l'actionnement de la course de piston.

4. Système d'entraînement hydraulique selon l'une des revendications précédentes,
l'agencement de vanne (70) étant conçu de sorte que les orifices de travail de ladite seconde hydromachine (30) puissent être connectés à un réservoir (12) et déconnectés de celui-ci.

5. Système d'entraînement hydraulique selon l'une des revendications précédentes,
un agencement de vanne (70) respectif étant fourni pour commander chaque seconde hydromachine (30).

6. Véhicule comprenant le système d'entraînement hydraulique (10) selon la revendication 5,
chaque seconde hydromachine (30) étant reliée par entraînement à une roue respective, et
chaque dispositif de vanne (70) étant conçu pour être actionné sur la base d'une quantité détectée de patinage au niveau de la roue respective.

7. Véhicule selon la revendication 6,
les agencements de vanne (70) étant conçus pour provoquer un changement dans la vitesse de véhicule même si aucun patinage n'est détecté au niveau d'une roue.
